# EUROPEAN PATENT APPLICATION

(11) **EP 2 618 527 A2**
(43) Date of publication of application: **24.07.2013**
(21) Application number: 13150178.5
(22) Date of filing: 03.01.2013
(51) Int. Cl.: H04L 12/46

(54) **Dynamic virtual LANs to segregate data**

(30) Priority: 05.01.2012 US 201213344278
(71) Applicant: General Electric Company, Schenectady, New York 12345 (US)
(72) Inventor: Caffrey, Paul O., Salem, VA 24153 (US); Selvey, James, Salem, VA 24153 (US)
(74) Representative: Picker, Madeline Margaret

(57) **Abstract**

Systems, methods, and apparatus for receiving commands and controlling allocation of ports of a communications switch (150) to one or more virtual local area networks (VLANs).

## Description

### BACKGROUND OF THE INVENTION

This invention generally relates to communications networks, and in particular to methods, apparatus, and systems for dynamically configuring virtual local area networks (VLANs) to segregate data.

Virtual local area networks (VLANs) are used to provide multiple parallel local area networks (LANs) with segregation of traffic between each of the VLANs. Further, the VLANs can be implemented as multiple OSI layer 3 networks (Network Layer) with common layer 2 (Data Link Layer) switches across the various VLANs.

VLANs can be particularly useful in applications such as power plant controls and management. Various hardware controller, general purpose controllers, databases, and interfaces may be connected to one or more ports on one or more communications switches. The ports on the one or more switches may be allocated to various VLANs. For example a power plant may have three VLANs of Control and Supervisory VLAN, Plant Level Communications VLAN, and Maintenance and Diagnostics VLAN. A switch with, for example, 24 ports may have 8 ports allocated to each of the VLANs. As an alternate example, the switch may have 10 ports allocated to the Control and Supervisory VLAN, 12 ports allocated to the Plant Level Communications VLAN, and 2 ports allocated to the Maintenance and Diagnostic VLAN. When a communications message is received by a port on a switch the message may be retransmitted or broadcast to all of the ports of the switch that are allocated to the VLAN on which the message was received. However, the message may not be broadcast over the other of the ports that are not allocated to the VLAN corresponding to the port that received the message.

Conventional LANs and associated switches can have ports that are preconfigured or statically allocated to one of various VLANs. Therefore each of the ports of each of the switches must be correctly connected for the proper functioning of all nodes on the network. Errors, such as human error in setting up and accurately connecting each and every port of a LAN can lead to failure of one or more nodes of the network from communicating as required. Often times large networks, such as those used for power plant control, can include around one-hundred switches and thousands of associated ports. The set up of such complex networks may lead to incorrect connections that may then need to be painstakingly debugged. Furthermore, there may be failure of various ports in a network such as, for example, due to hardware failure of a port transceiver. In such a case, ports may need to be reallocated. With statically allocated ports, ports may need to be physically reconnected to compensate for any port failures. Such processes may be relatively slow and require various levels of human involvement.

### BRIEF SUMMARY OF THE INVENTION

Certain embodiments of the invention can provide systems, methods, and apparatus for improved segregation of data on one or more virtual local area networks (VLANs). Embodiments of the invention can include communications switches and bridges with ports that can be dynamically allocated to one of at least one VLAN. Embodiments of the invention can further include communications switches that can receive a command over a port and dynamically allocate one or more ports to one of at least one VLAN. Embodiments of the invention can also include local area networks (LAN) with at least one communications switch that can dynamically allocate constituent ports to one of at least one VLAN based on control commands received through one or more of the constituent ports. In one aspect, embodiments of the invention provide a LAN where ports are allocated dynamically. Therefore, ports are not statically allocated. Embodiments of the invention may be robust to miswiring, misallocation, misconnecting of ports of a communication switch on a LAN. In another aspect, ports of a communications switch may be allocated from one VLAN to another based on up to date bandwidth requirements and other considerations.

In one embodiment, a communications switch can include at least one port for communicating over at least one virtual local area network (VLAN) and a switch controller executing software instructions thereon for controlling the at least one port, wherein the switch controller can receive commands and can dynamically allocate each of the at least one ports to each of the at least one VLANs based at least in part on the commands.

In another embodiment, a method can include providing a communications switch comprising at least one port for communicating over at least one virtual local area network (VLAN) and providing a switch controller executing software instructions for controlling each of the at least one ports. The method can further include receiving commands from one or more controllers and dynamically allocating each of the at least one ports to each of the at least one VLANs based at least in part on the received commands.

In yet another embodiment, a local area network (LAN) can include at least one communications switch, at least one port on each of the communications switches, at least one switch controller for controlling each of the at least one communications switches, and at least one controller connected to one or more of the at least one ports. The at least one controller can transmit a control command to one of the at least one communications switch, and the switch controller corresponding to the one of the at least one communications switch dynamically allocates one or more ports of the at least one port of the communications switch to one of at least one virtual local area network (VLAN) based at least in part on the control command.

Other embodiments, features, and aspects of the invention are described in detail herein and are considered a part of the claimed inventions. Other embodiments, features, and aspects can be understood with reference to the following detailed description, accompanying drawings, and claims.

### BRIEF DESCRIPTION OF THE FIGURES

Reference will now be made to the accompanying tables and drawings, which are not necessarily drawn to scale, and wherein:
FIG. 1 is a simplified schematic diagram illustrating an example communications network that can be operated in accordance to embodiments of the invention.
FIG. 2 is a simplified schematic diagram of an example communications switch with various ports that can be dynamically allocated in time in accordance with an embodiment of the invention.
FIG. 3 is a flow diagram of an example method for routing a data packet on a communications switch in accordance with an embodiment of the invention.

### DETAILED DESCRIPTION OF EMBODIMENTS OF THE INVENTION

Embodiments of the invention are described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Embodiments of the invention may provide apparatus, systems, and methods for segregating data on a communications network. Embodiments of the invention may further enable improved allocation of communications ports to various virtual local area networks (VLANs). The improvements may entail dynamically allocating communications ports of communications switches on the network based on receiving one or more command messages via one or more ports of the switch. Additionally, by dynamically allocating the ports of a switch, the ports can be allocated to various VLANs depending on real time parameters, such as network bandwidth needs. The dynamic allocation of ports may further allow relatively high tolerance to error in setting up a network or to introducing new components, such as switches, to the network. By being able to dynamically allocate ports, even if a port is wired incorrectly, for example, by a human installer, the error may be repaired by reallocating the port. In one embodiment, once ports on a switch are allocated to a VLAN, any signals arriving on a port allocated to a particular VLAN is broadcast out to all ports allocated to that particular VLAN..

Example embodiments of the invention will now be described with reference to the accompanying figures.

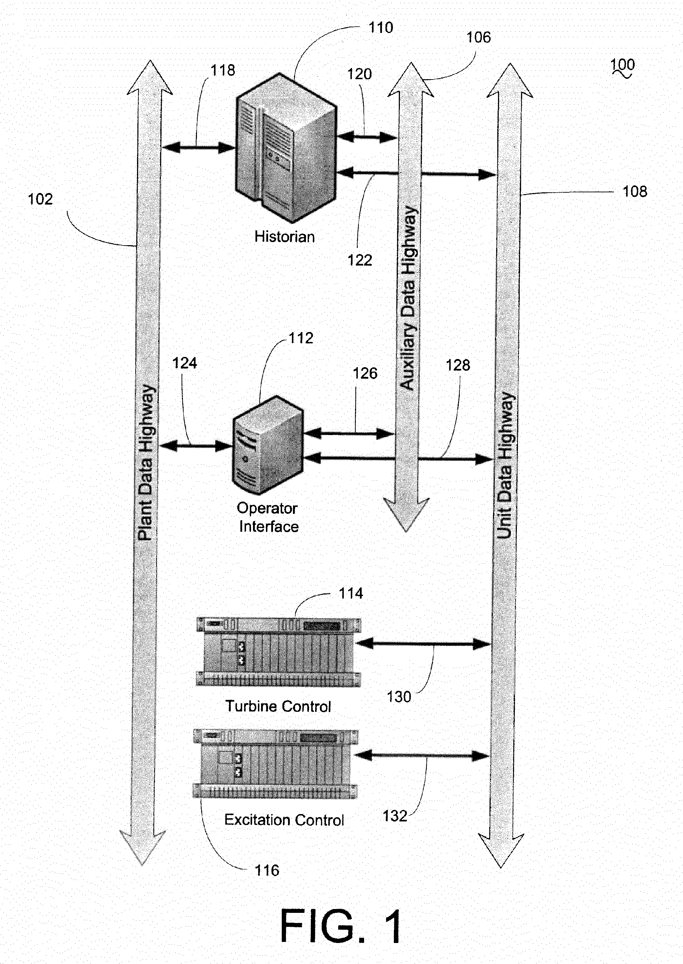

Referring now to FIG. 1, a simplified schematic diagram illustrating an example communications network 100 in the form of a power plant communications network that can be operated in accordance to embodiments of the invention and can include three distinct VLANs: plant data highway 102, auxiliary data highway 106, and unit data highway 108. The network can further include various end terminals, such as a historian 110 and an operator interface 112, as well as, various controllers, such as a turbine control 114 and an excitation control 116. In a power plant setting, as is described here as a non-limiting example, the end terminals 110 and 112 may include, but is not limited to, a computer, work station, a mobile terminal, a smart device, a server, or combinations thereon. The end terminals may serve the purposes of providing databases, logs, human machine interfaces (HMI) and the like. The controllers 114 and 116 may serve the functions of controlling various aspects of a power plant, such as turbine controller 114, excitation controller 116, and the like. The controllers 114 and 116 may include, but is not limited to, a microprocessor, microcontroller, control board, digital signal processor (DSP), field programmable gate array (FPGA), industry specific proprietary controllers, such as a General Electric (GE) Mark VIe controller, or combinations thereof.

Each of the end terminals 110 and 112 and controllers 114 and 116 may further be connected to at least one VLAN via communicative pathways 118, 120, 122, 124, 126, 128, 130, and 132. The end terminal may be connected to all of the VLANs, as is shown for the historian 110 with communicative pathways 118, 120, and 122, connecting to the plant data highway 102, auxiliary data highway 106, and unit data highway 108, respectively. The controller 114 and 116 may be connected to one or more VLANs. For example, the turbine controller 114 is shown to be connected to the unit data highway 108 via communicative pathway 130.

It should be noted, that the network topology of the network 100 may be modified in various ways in accordance with certain embodiments of the invention. For example, in certain embodiments, one or more nodes may be placed and interconnected at a different location relative to the other nodes on the network 100. Additionally, in other embodiments, other nodes can be added or removed from the network 100.

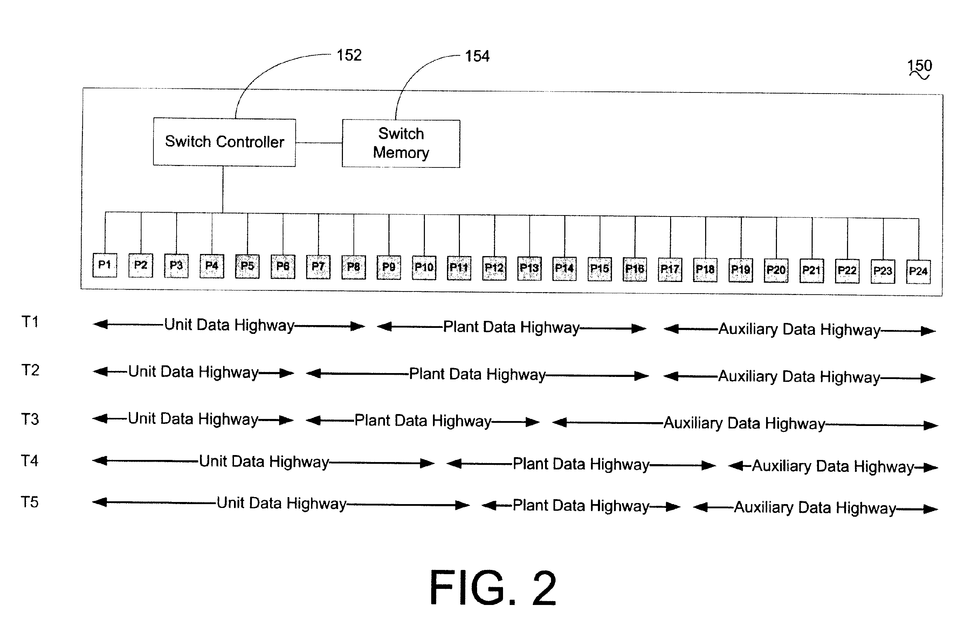

The communicative pathways 118, 120, 122, 124, 126, 128, 130, and 132 of the network 100 can be established by one or more communications switches 150, each with various ports P1-P24 that can be dynamically allocated in time in accordance with an embodiment of the invention, an example of which is shown in FIG. 2. In other words, each of the communicative pathways 118, 120, 122, 124, 126, 128, 130, and 132, may be established via at least one communications port.

The communications switch 150 may include a switch controller 152 and switch memory 154. The switch controller 152 can run software that may be stored in the switch memory 154 to dynamically allocate each of the ports P1-P24 of the switch 150 to one or more VLANs based upon a received command via one or more of the ports P1-P24.

Consider, for example, that the communications switch 150 receives a command via port P1 to allocate ports P1 through P8 to a first VLAN, such as unit data highway 108. Based upon the received command, the software running on the switch controller 152 may allocate all of the ports P1 through P8 to the unit data highway 108. In other words, data packets that received on any of the ports P1 to P8 will be routed to all of the other ports P1-P8 and not to ports P9-P24, thereby creating a VLAN that is segregated from other VLANs that may use ports P9-P24 to establish communicative links and pathways.

The communications switch 150 may further receive a second command from another port, such as P12 to allocate ports P9-P16 to a second VLAN, such as plant data highway 102. Based on the received command, the switch controller 152 with software running thereon may allocate ports P9 to P16 to the second VLAN. As a result, any subsequent data packets received by the communications switch on any of ports P9 to P16 may be retransmitted on to all of the other of the ports P9 to P16 of the same second VLAN, such as plant data highway 102.

The communications switch 150 may yet further receive a third command from another port, such as P24 to allocate ports P17-P24 to a third VLAN, such as auxiliary data highway 106. Based on the received command, the switch controller 152 with software running thereon may allocate ports P17 to P24 to the second VLAN. As a result, any subsequent data packets received by the communications switch on any of ports P17 to P24 ay be retransmitted on to all of the other of the ports P17 to P24 of the same third VLAN, such as auxiliary data highway 106. The example of the ports P1 to P24 allocated as described, is graphically illustrated at time T1 on FIG. 2.

It should be noted that the first, second, and third commands may be received by the communications switch 150 contemporaneously or with temporal separation therebetween. It should also be noted that the first, second and third commands may be received in any one of the ports P1-P24 to command the switch controller 152 to dynamically allocate the ports P1-P24 of the switch controller 150. For example, all three commands may be received at port P1 in one embodiment of the invention.

Although this example shows the allocation of all the ports P1-P24 to one of three VLANs, in other embodiments, there may be a greater number or a fewer number of VLANS that the ports P1-P24 are allocated to. Furthermore, some ports of the communications switch 150 may not be allocated to a VLAN in accordance with embodiments of the invention. Additionally, 24 constituent ports of the communications switch 150 is a non-limiting example. The communications switch 150 can alternatively have 48, 96, or any other number of ports with dynamic allocation of any or all of its constituent ports in accordance to embodiments of the invention.

Continuing on with the example, at or around a time T2 subsequent to time T1, the communications switch 150 may receive additional commands, such as to allocate ports P1 to P6 to the unit data highway 108, ports P7 to P16 to the plant data highway 102, and ports P17 to P24 to the auxiliary data highway 106. In response to the commands, the communications switch 150 may dynamically allocate its constituent ports P1-P24 accordingly.

Similarly, additional commands may be received by one or more ports P1-P24 of the communications switch at subsequent times T,3, T4, and T5, to dynamically allocate or reallocate one or more ports P1-P24 to a different VLAN.

The allocation of ports P1-P24 may be based on various factors including, but not limited to, bandwidth needs of various VLANs, control needs of apparatus being controlled using the network 100, dynamic correction of misconnected ports, or combinations thereof.

The commands to allocate ports P1-P24 to the switch controller 152 may be received from any source, for example, other communications switches, such as higher priority switches, a network controller 114 and 116, one of many end terminals 110 and 112, or the like.

Data packets that are sent to the communication switch 150 may have a field for VLAN identifier. The VLAN identifier of the received data packet may be used for the purposes of onward routing of the data packet. For example the data packet may be rebroadcast on all of the ports of a switch allocated to a VLAN corresponding to the VLAN identifier of the data packet.

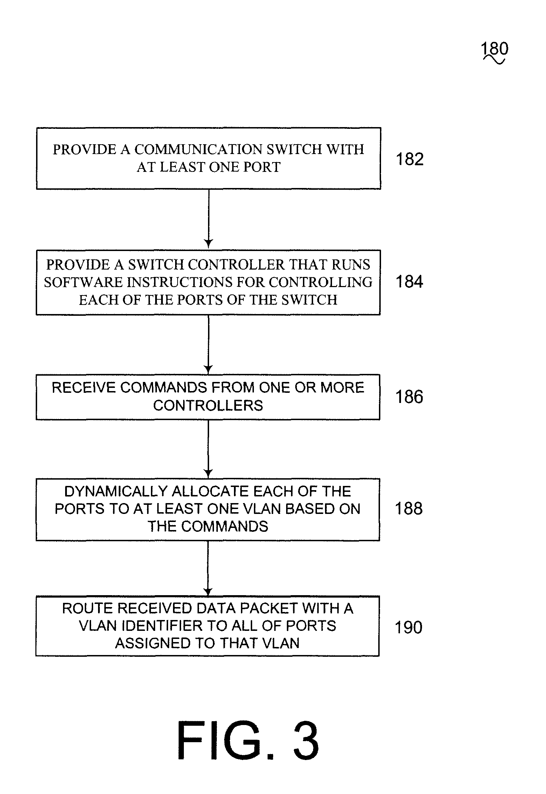

Referring now to FIG. 3, an example method 180 for routing a data packet on a communications switch is described. At block 182, a communication switch with at least one port can be provided. The communication switch can be the communication switch 150 as described in reference to FIG. 2. At block 184, a switch controller that runs software instructions for controlling each of the ports of the switch can be provided. The software may be stored on switch memory 154 and executed on the switch controller 152 as shown in FIG. 2. At block 186, commands from one or more controllers can be received. Such commands may be provided to the switch controller 152 via one of the ports P1-P24 of the communication switch 150 from one of the controllers 114 and 116 or other end terminals 110 and 112 of the communications network 100 via communicative pathways 114, 116, 118, 120, 122, 124, 126, and 128. At block 188, each of the ports can be dynamically allocated to at least one VLAN based on the received commands. At block 190, a received data packet with a VLAN identifier can be routed to all of the ports assigned to that VLAN.

It should be noted, that the method 180 may be modified in various ways in accordance with certain embodiments of the invention. For example, one or more operations of method 180 may be eliminated or executed out of order in other embodiments of the invention. Additionally, other operations may be added to method 180 in accordance with other embodiments of the invention.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the invention, including the best mode, and also to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A communications switch (150) comprising:
at least one port for communicating over at least one virtual local area network (VLAN); and,
a switch controller (152) executing software instructions thereon for controlling the at least one port,
wherein the switch controller (152) receives commands and dynamically allocates each of the at least one ports to each of the at least one VLANs based at least in part on the commands.

2. The communications switch of claim 1, further comprising an electronic memory (154) for storing the software instructions.

3. The communications switch of claim 1 or claim 2, wherein the at least one port comprises a plurality of ports, each of which are dynamically configured by the software instructions executed on the switch controller (152).

4. The communications switch of claim 1, 2 or 3, wherein the at least one VLAN comprises a first, second, and third VLAN.

5. The communications switch of claim 4, wherein control and supervisory data is communicated on the first VLAN, plant level communications data is communicated on the second VLAN, and maintenance and diagnostics data is communicated on the third VLAN.

6. The communications switch of claim 4 or claim 5, wherein data communicated on one of the first, second, and third VLANs are segregated from the other of the first, second, and third VLANs.

7. The communications switch of any preceding claim, wherein the receiving commands comprises receiving data packets containing dynamic port allocation instructions from controllers external to the communications switch.

8. The communications switch of any preceding claim, wherein the switch controller (152) executes a VLAN registration protocol to dynamically register each of the at least one ports with a VLAN identifier.

9. A method comprising:
providing a communications switch (150) comprising at least one port for communicating over at least one virtual local area network (VLAN);
providing a switch controller (152) executing software instructions for controlling each of the at least one ports;
receiving commands from one or more controllers; and,
dynamically allocating each of the at least one ports to each of the at least one VLANs based at least in part on the received commands.

10. The method of claim 9, further comprising receiving a data packet with a VLAN identifier and routing the data packet to each of the at least one ports corresponding to the VLAN identifier.

11. The method of claim 9 or claim 10, wherein control and supervisory data is communicated on a first VLAN, plant level communications data is communicated on a second VLAN, and maintenance and diagnostics data is communicated on a third VLAN.

12. The method of claim 11, wherein data communicated on one of the first, second, and third VLANs are segregated from the other of the first, second, and third VLANs.

13. A local area network (LAN) comprising:
at least one communications switch (150);
at least one port on each of the communications switches;
at least one switch controller (152) for controlling each of the at least one communications switches; and,
at least one controller connected to one or more of the at least one ports;
wherein the at least one controller transmits a control command to one of the at least one communications switch, and the switch controller corresponding to the one of the at least one communications switch dynamically allocates one or more ports of the at least one port of the communications switch to one of at least one virtual local area network (VLAN) based at least in part on the control command.

14. The network of claim 13, wherein one of the at least one communications switches receives a data packet with a VLAN identifier and routes the data packet to each of the at least one ports on that communication switch corresponding to the VLAN identifier.

15. The network of claim 13 or claim 14, wherein each of the at least one port on each of the communications switches are dynamically configured by software instructions executed on each of the corresponding switch controllers (152).
